Europäisches Patentamt

European Patent Office

Office européen des brevets

(11) Publication number : **0 470 833 A2**

# EUROPEAN PATENT APPLICATION

(21) Application number : **91307272.4**

(51) Int. Cl.$^5$ : **C08G 59/50,** C08G 59/64

(22) Date of filing : **08.08.91**

(30) Priority : **10.08.90 JP 212254/90**

(43) Date of publication of application :
**12.02.92 Bulletin 92/07**

(84) Designated Contracting States :
**DE FR GB IT**

(71) Applicant : **SUMITOMO RUBBER INDUSTRIES
LIMITED
No. 1-1, Tsutsui-cho 1-chome
Chuo-ku Kobe-shi Hyogo 651 (JP)**

(72) Inventor : **Hayashi, Shuichi
Kobu-ryo, 1-23, Hinoguchi-cho 1-chome
Nishinomiya-shi, Kyogo 663 (JP)**
Inventor : **Kojimoto, Tetsuya
34-16, Kaiden 4-chome
Nagaokakyo-shi, Kyoto 617 (JP)**

(74) Representative : **Lamb, John Baxter et al
MARKS & CLERK 57-60 Lincoln's Inn Fields
London WC2A 3LS (GB)**

(54) Soft epoxy resin composition.

(57)    A soft epoxy resin composition comprises an epoxy resin and a curing agent which is an alkyl amine alkylene oxide addition polymer having four or more carbon atoms in the alkylene oxide moiety.

EP 0 470 833 A2

The present invention relates to a soft epoxy resin composition, and more particularly, to a soft epoxy resin composition superior in flexibility over a wide temperature range including a low temperature region.

Epoxy resin is superior in adhesion, chemical resistance, alkali resistance and the like and has been conventionally applied to a wide field.

However, the cured body of epoxy resin generally has the disadvantages in that it has high modulus and it is hard and fragile. As methods of improving the disadvantages to provide the epoxy resin with flexibility, the following methods have been known:

(1) a method of incorporating urethane bonds into molecules of epoxy resin

(2) a method of adding liquid rubber such as ATBN (amine-terminal butadiene nitrile rubber) and CTBN (carboxyl group-terminal butadiene nitrile rubber) to an epoxy resin composition

(3) a method of incorporating urethane bonds into a curing agent of epoxy resin to soft the epoxy resin

(4) a method of using as a curing agent of epoxy resin polyoxypropylene amine which is a flexible curing agent

(5) a method of adding excess amounts of polyamide as a curing agent of epoxy resin

(6) a method of adding a plasticizer to epoxy resin

However, when these methods are utilized, there are the following problems. More specifically, various types of epoxy resin obtained using the methods (1) to (6) are all low in reaction speed and most of them are not cured at ordinary temperature. In addition, their cured bodies cannot be kept flexible at low temperature of not more than -20°C. In the methods (1) to (4), the viscosity of additives, epoxy resin components or curing agent components are high, thereby lowering the work efficiency, and the reaction speed of the epoxy resin is significantly low. Furthermore, in the method (5), which is a method known for long, the viscosity is high, thereby lowering the work efficiency, and the cured body cannot be provided with sufficient flexibility. In the method (6) , plasticizer components are scattered from the cured body by long term preservation, so that the flexibility of the cured body is lowered.

SUMMARY OF THE INVENTION

A main object of the present invention is to provide a soft epoxy resin composition which is rapidly reacted and cured at ordinary temperature.

Another object of the present invention is to provide a soft epoxy resin composition in which the viscosity of a mixture containing epoxy resin components and curing agent components is low, i.e., not more than 10000 cps at ordinary temperature, resulting in improved work efficiency.

A further object of the present invention is to provide a soft epoxy resin composition which is superior in flexibility not only at ordinary temperature but also at low temperature of not more than -20°C for a long time.

As the result of doing research effort so as to achieve the above described objects, the inventors of the present invention have found new facts that when an alkylamine alkylene oxide addition polymer having four or more carbon atoms in its alkylene oxide moiety is used as a curing agent of epoxy resin, the addition polymer is superior in reactivity with epoxy resin main agent components, an epoxy resin composition is cured at ordinary temperature, the viscosity of a mixture of the addition polymer with the epoxy resin main agent components is low, resulting in improved work efficiency, and the cured body of the epoxy resin is superior in flexibility at low temperature even if a plasticizer is not added so that there is no possibility that it is not changed with time.

Consequently, the soft epoxy resin composition of the present invention comprises at least an epoxy resin main agent and a curing agent, and the above curing agent is an alkylamine alkylene oxide addition polymer having four or more carbon atoms in its alkylene oxide moiety.

The soft epoxy resin composition according to the present invention can be suitably used for various applications so that its industrial value is very high. For example, it can be utilized as a filler for repairing cracking occurring in a concrete structure deteriorated, peeling of a finishing agent or the like, since it has advantages that it is low in viscosity and is cured at ordinary temperature. In addition, it can be used as a material for encapsulating an electronic component or the like, since it has the advantages that a cured body superior in flexibility and strength at low temperature is obtained, cracking does not easily occur and internal stress does not easily remain in the cured body.

Furthermore, when the soft epoxy resin composition is provided with thixotropy by adding anhydrous silica, calcium carbonate or the like, it is applicable to adhesives for civil engineering and construction such as a moire material, so that it can be expected that it is utilized for many industrial fields.

The foregoing and other objects, features, aspects and advantages of the present invention will become more apparent from the following detailed description of the present invention.

## DESCRIPTION OF THE PREFERRED EMBODIMENTS

The above described alkylamine alkylene oxide addition polymer having four or more carbon atoms in its alkylene oxide moiety according to the present invention is an addition polymer formed from aliphatic amine and an alkylene oxide having four or more carbon atoms, which is expressed by, for example, the following general formula:

$$NH[(CH_2)_m (R)_n - A]_2$$

(wherein, R denotes an alkylene oxide moiety having four or more carbon atoms, A denotes a hydroxyl group or an amino group, n denotes integers from 1 to 26, and m denotes integers from 1 to 134). The addition polymers are used alone or in combination. Among them, an addition polymer having four to six carbon atoms in its alkylene oxide moiety, that is, containing a tetramethylene oxide, a pentamethylene oxide or a hexamethylene oxide as its alkylene oxide moiety is particularly preferable inproviding the cured body with superior flexibility. In the case of an addition polymer having not more than three carbon atoms in its alkylene oxide moiety, the addition polymer is superior in reactivity with epoxy resin main agent components but the cured body cannot be provided with sufficient flexibility. On the other hand, in the case of an addition polymer having not less than seven carbon atoms in its alkylene oxide moiety, the cured body can be provided with sufficient flexibility but the reactivity with epoxy resin main agent components is liable to be decreased.

It is preferable that the alkylamine alkylene oxide addition polymer is contained at a ratio of 30 to 100 % of the all reaction equivalent weight. When the ratio is less than 30 %, the reaction speed with the epoxy resin main agent components is decreased and the cured body is not sufficiently flexible.

As other curing agents used as required in the present invention, there may be used any curing agent conventionally used as a curing agent of epoxy resin. Examples of the curing agents include aliphatic amine, various types of dimer acid polyamide, alicyclic amine, aromatic amine and their modified substances. The curing agents are used alone or in combination.

Although such other curing agents are not indispensable to the present invention, the curing agents can be suitably added depending on, for example, the objective of use so as to raise reactivity of overall epoxy resin and provide the epoxy resin with toughness. However, the amount of addition is preferably less than 30 % of the all reaction equivalent weight.

Examples of commercially available products of the above described other curing agents include DH-101 (which is a trademark of Daito Sangyo Co., Ltd .), Versamide 150 (which is a trademark of Henkel-Hakusui Co., Ltd.), Gripcoat H326 (which is a trademark of Sumitomo Rubber Industries Ltd.), XB3140 (which is a trademark of CIBA-GEIGY Co., Ltd.), H7100 (which is a trademark of ACR Co., Ltd.), M-1309 (which is a trademark of Daito Sangyo Co., Ltd.), and Gripcoat H312 (which is a trademark of Sumitomo Rubber Industries Ltd.).

As the epoxy resin main agent according to the present invention, there can be used various types of epoxy resin which have been conventionally known. In the present invention, there may be used any type of epoxy resin having at least two epoxy groups in its molecules. Examples of the epoxy resin include bisphenol A-type epoxy resin, nobolac-type epoxy resin, bisphenol F-type epoxy resin, hydrogenated bisphenol A-type diglycidylether resin, halogenated bisphenol A-type epoxy resin, glycidyl amine epoxy resin, glycidyl ester epoxy resin, alicyclic epoxy resin and the like. These types of epoxy resin may be used alone or in combination.

It is preferable for providing strength that the epoxy resin is contained at a ratio of not less than 50 % by weight of the epoxy resin main agent. Examples of commercially available products of the above described epoxy resin include Epikote 828, Epikote 834 and Epikote 1001 (which are trademarks of Yuka-Shell Epoxy Co., Ltd.), ARALDITE GY250 and ARALDITE GY260 (which are trademarks of CIBA-GEIGY Co., Ltd.), Sumiepoxy ELA115 and Sumiepoxy ELA127 (which are trademarks of Sumitomo Chemical Company, Limited), ACR Epoxy R82 and ACR Epoxy R86 (which are trademarks of ACR Co., Ltd.), DER 661 and DER 667 (which are trademarks of Dow Chemical Co., Ltd.), Epikote 807 and Epikote 152 (which are trademarks of Yuka-Shell Epoxy Co., Ltd.), EPICLON N665 (which is a trademark of Dainippon Ink and Chemicals, Inc.), Epikote 5050 (which is a trademark of Yuka-Shell Epoxy Co., Ltd.), and Epikote 604 and Epikote 871 (which are trademarks of Yuka-Shell Epoxy Co., Ltd.).

In order to lower the viscosity of the epoxy resin composition to improve the work efficiency, there may be used, along with the above described types of epoxy resin, low viscosity monofunctional epoxy resin. This is generally used as reactive diluent of epoxy resin. It is desirable that such monofunctional epoxy resin is contained at a ratio of less than 50 % by weight of the epoxy resin main agent.

Examples of monofunctional epoxy resin include EPICLON 520 (which is a trademark of Dainippon Ink and Chemicals, Inc.) and Carjula E (which is a trademark of Yuka-Shell Epoxy Co., Ltd.).

It is preferable for reactivity, physical properties, and work efficiency that an alkylamine alkylene oxide addition polymer containing a tetramethylene oxide as its alkylene oxide moiety preferably has a molecular weight of not more than 2000. Examples of such an alkylamine alkylene oxide addition polymer include Versamine

3

I-376 (which is a trademark of Henkel-Hakusui Co., Ltd.).

Typical examples of the epoxy resin composition according to the present invention are as follow:

epoxy resin (having two or more functional groups)

... 50 to 100 parts by weight

epoxy resin (having one functional group)

... less than 50 parts by weight

an alkylamine tetramethylene oxide (having a molecular weight of less than 2000)

... 3 to 100 % of the all reaction equivalent

other curing agents (aliphatic amine, alicyclic amine, aromatic amine, polyamide and their derivatives)

... less than 30 % of the all reaction equivalent

EXAMPLE

A soft epoxy resin composition according to the present invention is explained with concrete examples, Examples 1 to 9 and Comparative examples 1 to 3.

Epoxy Resin Main Agent Components

The following main agents were used at the ratios shown in Table 1.

Epikote 828:

bisphenol A-type epoxy resin manufactured by Yuka-Shell Epoxy Co., Ltd.

EPICLON 520:

Monofunctional epoxy resin (reactive diluent) manufactured by Dainippon Ink and Chemicals, Inc.

Curing Agents

The following curing agents were used at the ratios shown in Table 1.

Versamine I-376:

an alkylamine tetrmethylene oxide addition polymer (having a molecular weight of approximately 1000) manufactured by Henkel-Hakusui Co., Ltd.

H 312:

Mannich modified amine of xylenediamine manufactured by Sumitomo Rubber Industries Ltd.:

H 7100:

Short chain alicyclic amine manufactured by ACR Co., Ltd.

Comparative examples 4 to 6 and Comparative examples 9 to 11

Epikote 828 (bisphenol A-type epoxy resin manufactured by Yuka-Shell Epoxy Co., Ltd.) was used as a main agent at the ratios shown in Table 2, and the following substances were used as a curing agent at the ratios shown in Table 2.

Comparative example 4: XB 3149 (flexible polyamide amine manufactured by CIBA-GEIGY Co., Ltd.)

Comparative example 5: DSX 178 (flexible polyamide amine manufactured by Henkel-Hakusui Co., Ltd.)

Comparative example 6: H 4510 (flexible polyamide amine manufactured by ACR Co., Ltd.)

Comparative example 9: Jeffermine D230 (analkylamine propylene oxide addition polymer ( having a molecular weight of 230) manufactured by Jefferson Chemical Company INC.)

Comparative example 10: Jeffermine D400 (alkylamine propylene oxide addition polymer (having a molecular weight of 400) manufactured by Jefferson Chemical Company INC.)

Comparative example 11: Jeffermine D2000 (alkylamine propylene oxide addition polymer (having a molecular weight of 2000) manufactured by Jefferson Chemical Company INC.)

Comparative examples 7 and 8

The following substances were used as a main agent at the ratios shown in Table 2, and XB 3140 (an alicyclic amine curing agent manufactured by CIBA-GEIGY Co., Ltd.) was used as a curing agent at the ratios shown in Table 2.

Comparative example 7: XB 3674 (urethane modified epoxy resin manufactured by CIBA-GEIGY Co., Ltd.)

Comparative example 8: TRS 515 (rubber modified epoxy resin manufactured by Dainippon Ink and Chemicals Inc.)

Evaluation Test

The following tests were conducted on the soft epoxy resin compositions obtained in the examples and the comparative examples.

(I) Measurements of Gelation Time (min)

In order to investigate the curing period of time of the soft epoxy resin ,composition obtained in each of the examples and the comparative examples, 200g of the flexible epoxy resin composition obtained was applied to a tickness of 500 $\mu$ m to measure the gelation time at 20°C .

(II) Measurements of Viscosity (cps)

The Viscosity of the flexible epoxy resin composition obtained in each of the embodiments and the comparative examples was measured using an E-type viscometer manufactured by Tokyo Keiki Co., Ltd.

(III) Measurements of Tensile Strength (kg/cm$^2$ ) and Elongation at breaking (%)

In order to investigate the strength at 0°C and 20°C and the elongation at breaking of the soft epoxy resin composition obtained, the tensile strength and the elongation at breaking were measured according to JIS K 7113. More specifically, the flexible epoxy resin composition was poured into a No. 1 dumbbell at ordinary temperature. After the flexible epoxy resin composition was allowed to stand at room temperature for 12 hours and then, was immersed in water at 0°C and 20°C for 28 days and then, the tensile strength and the elongation at breaking thereof were measured. The elongation at breaking measured is an indication of flexibility. The results of above described evaluation tests are shown in Table 1 and Table 2.

In the tables 1 and 2, "parts" is parts by weight.

In the tables 1 and 2, a numerical value in a parenthesis in each of the columns of curing agents is the ratio (%) of the curing agent to the all reaction equivalent.

Table 1

| Components | | Examples | | | | | |
|---|---|---|---|---|---|---|---|
| | | 1 | 2 | 3 | 4 | 5 | 6 |
| main agent (parts) | Epikote 828 | 100 | 80 | 60 | 50 | 70 | 100 |
| | EPICLON 520 | | 20 | 40 | 50 | 30 | |
| curing agent (parts) | Versamine 1-376 | 130 (100) | 125 (100) | 119 (100) | 115 (100) | 116 (95) | 97 (73) |
| | H 312 | | | | | 11 | 18 |
| | H 7100 | | | | | | |
| Gelation Time(min.) 200g 20°C | | 20 | 22 | 30 | 40 | 20 | 17 |
| Viscosity of mixed resin (cps) 25°C | | 1200 | 1000 | 800 | 500 | 900 | 880 |
| Tensile Strength (kg/cm²) 20°C | | 30 | 22 | 20 | 10 | 25 | 31 |
| Elongation at breaking(%) 20°C | | 50 | 53 | 78 | 80 | 84 | 82 |
| Tensile Strength (kg/cm²) 0°C | | 72 | 66 | 48 | 43 | 113 | 138 |
| Elongation at breaking (%) 0°C | | 110 | 103 | 100 | 101 | 99 | 70 |

## Table 1(continued)

| Components | | Examples | | | Comparative Examples | | |
|---|---|---|---|---|---|---|---|
| | | 7 | 8 | 9 | 1 | 2 | 3 |
| main agent (parts) | Epikote 828 | 80 | 60 | 50 | 40 | 70 | 70 |
| | EPICLON 520 | 20 | 40 | 50 | 60 | 30 | 30 |
| curing agent (parts) | Versamine I-376 | 72 (58) | 97 (80) | 72 (63) | 112 (100) | 37 (30) | 37 (30) |
| | H 312 | 28 | | | | 32 | |
| | H 7100 | | 6 | 7 | | | 10 |
| Gelation Time(min.) 200g 20 ℃ | | 14 | 18 | 15 | 60 | 12 | 8 |
| Viscosity of mixed resin (cps) 25℃ | | 850 | 900 | 900 | 300 | 800 | 800 |
| Tensile Strength (kg/cm²) 20℃ | | 50 | 58 | 64 | 2 | 100 | 97 |
| Elongation at breaking(%) 20℃ | | 80 | 104 | 103 | 33 | 20 | 30 |
| Tensile Strength (kg/cm²) 0℃ | | 171 | 171 | 180 | 10 | 250 | 180 |
| Elongation at breaking (%) 0℃ | | 50 | 78 | 50 | 50 | 4 | 23 |

Table 2

| Components | | Comparative Examples | | | |
|---|---|---|---|---|---|
| | | 4 | 5 | 6 | 7 |
| main agent (parts) | Epikote 828 | 100 | 100 | 100 | |
| | XB3674 | | | | 100 |
| | TRS515 | | | | |
| curing agent (parts) | XB3149 | 85(100) | | | |
| | DSX178 | | 114(100) | | |
| | H4510 | | | 50(100) | |
| | XB3140 | | | | 22(100) |
| | Jeffermine D230 | | | | |
| | Jeffermine D400 | | | | |
| | Jeffermine D2000 | | | | |
| Gelation Time(min.) 200g 20 °C | | 11-14 (hr) | 110 | 100 | 180 |
| Viscosity of mixed resin (cps) 25°C | | 2500 | 370 | 3000 | >10000 |
| Tensile Strength (kg/cm²) 20°C | | ___*1 | 0.9 | 500 | 0.8 |
| Elongation at breaking(%) 20°C | | ___*2 | 78 | 5 | 50 |
| Tensile Strength (kg/cm²) 0°C | | ___*1 | 61 | ___*1 | 40 |
| Elongation at breaking (%) 0°C | | ___*2 | 90 | ___*2 | 70 |

*1 : Not developing strength
*2 : Impossible to measure

## Table 2 (continued)

| Components | | Comparative Examples | | | |
|---|---|---|---|---|---|
| | | 8 | 9 | 10 | 11 |
| main agent (parts) | Epikote 828 | | 100 | 100 | 100 |
| | XB3674 | | | | |
| | TRS515 | 100 | | | |
| curing agent (parts) | XB3149 | | | | |
| | DSX178 | | | | |
| | H4510 | | | | |
| | XB3140 | 30(100) | | | |
| | Jeffermine D230 | | 30(100) | | |
| | Jeffermine D400 | | | 55(100) | |
| | Jeffermine D2000 | | | | 270(100) |
| Gelation Time(min.) 200g 20 °C | | 120 | 18 | 41 | 100 |
| Viscosity of mixed resin (cps) 25°C | | >10000 | 1000 | 1000 | 600 |
| Tensile Strength (kg/cm²) 20°C | | 0.2 | 500 | 550 | 140 |
| Elongation at breaking(%) 20°C | | 70 | 1.7 | 5.1 | 28 |
| Tensile Strength (kg/cm²) 0°C | | 3.3 | ___*1 | ___*1 | ___*1 |
| Elongation at breaking (%) 0°C | | 250 | ___*2 | ___*2 | ___*2 |

*1 : Not developing strength
*2 : Impossible to measure

As obvious from Table 1 and Table 2, the comparative examples 4 to 8 all use the conventional curing agents, so that the viscosity of the soft epoxy resin composition is high, lowering the work efficiency, and the gelation time thereof is low. Particularly the comparative examples 7 and 8 use urethane modified epoxy resin and rubber modified epoxy resin, so that the viscosity of the soft epoxy resin composition is significantly high. The comparative example 5 uses as a main agent epoxy resin having two or more epoxy groups, so that the viscosity of the flexible epoxy resin composition is low but the tensile strength thereof at 20°C is low, that is, 0.9 kg/cm². In the comparative examples 4 and 8, the viscosity of the flexible epoxy resin composition is relatively low but the tensile strength thereof is low and the strength thereof is not developed.

On the other hand, in the examples 1 to 9 using as a main agent epoxy resin having at least two epoxy groups and, using as a curing agent an alkylamine tetramethylene oxide addition polymer (having a molecular weight of approximately 1000), the viscosity of the soft epoxy resin composition is low and the gelation time thereof is short. Moreover, both the tensile strength and the elongation at breaking thereof indicate good values both at ordinary temperature and at low temperature.

The comparative examples 9 to 11 use the same main agent as that in the examples 1 and 6 and use as a curing agent an alkylamine propylene oxide addition polymer, so that the soft epoxy resin composition is inferior in flexibility. The reason for this is considered that the cross linking density of the soft epoxy resin composition is too high so that the flexibility thereof is lost because the number of carbon atoms in the alkylene oxide moiety of the curing agent is as small as three. In addition, it is found from the comparative examples 9 to 11 that the gelation time of the flexible epoxy resin composition is longer as the molecular weight of the curing agent is increased. Consequently, it is preferable that the number of carbon atoms in the alkylamine alkylene oxide addition polymer used as a curing agent is four or more and the molecular weight thereof is not more than 2000.

It is found from the example 5 and the comparative examples 2 and 3 that the cured body of flexible epoxy resin is provided with superior flexibility when the alkyl amine tetramethylene oxide addition polymer serving as a curing agent is contained at a ratio of 30 to 100 % by weight of the all reaction equivalent weight.

The examples 2 to 5 and the examples 7 to 9 use a main agent containing not less than 50 % by weight of epoxy resin having two or more epoxy groups, so that both the tensile strength and the elongation at breaking of the flexible epoxy resin composition at ordinary temperature and at low temperature are superior to those in the comparative example 1 using a main agent containing only 40 % by weight of epoxy resin having not less than two epoxy groups. This proves that the epoxy resin main agent containing not less than 50 % by weight of epoxy resin having at least two epoxy groups in its molecules is suitable for providing flexibility.

Although the present invention has been described in detail, it is clearly understood that the same is by way of example only and is not to be taken by way of limitation, the spirit and scope of the present invention being limited only by the terms of the appended claims.

## Claims

1. A soft epoxy resin composition comprising an epoxy resin and a curing agent, characterized in that the curing agent is an alkylamine alkylene oxide addition polymer having four or more carbon atoms in its alkylene oxide moiety.

2. A composition according to claim 1, characterized in that the addition polymer is present in an amount from 30 to 100% of the total reaction equivalent.

3. A composition according to claim 1 or claim 2 characterized in that the alkylene oxide moiety in the addition polymer is a tetramethylene oxide.

4. A composition according to any one of the preceding claims characterized in that the epoxy resin contains not less than 50% by weight of a component having at least two epoxy groups in its molecules.

5. A composition according to any one of the preceding claims characterized in that the alkylamine alkylene oxide addition polymer has a molecular weight of not more than 2000.